# EUROPEAN PATENT SPECIFICATION

(11) **EP 3 096 608 B1**
(45) Date of publication and mention of the grant of the patent: **26.11.2025**
(21) Application number: 15700695.8
(22) Date of filing: 19.01.2015
(51) Int. Cl.: A01K 15/02

(54) **TOYS FOR ANIMALS**
SPIELZEUGE FÜR TIERE
JOUETS POUR ANIMAUX

(30) Priority: 20.01.2014 GB 201400872
(43) Date of publication of application: 30.11.2016
(73) Proprietor: Earls, Michael, Athenry, County Galway (IE)
(72) Inventor: Earls, Michael, Athenry, County Galway (IE)
(74) Representative: FRKelly
(86) International application number: PCT/EP2015/050885
(87) International publication number: WO 2015/107191

(56) References cited:
- WO-A1-99/25183
- GB-A- 1 290 777
- US-A- 3 105 457
- US-A- 5 297 981
- US-A- 563 170
- US-A- 745 806
- US-A1- 2005 039 696
- US-A1- 2013 017 912
- US-A1- 2015 133 217
- US-S- D 582 998
- US-S- D 685 034
- ZIRON MARTIN ET AL: "ENVIRONMENTAL ENRICHMENT FOR PIGS", 26 May 2022 (2022-05-26), pages 1 - 16, XP093289082, Retrieved from the Internet <URL:https://easyfix96.blob.core.windows.net/easyfix/2021/11/EF045-Pig-Enrichment-12-Page-A4-011118-compressed.pdf> [retrieved on 20250623]
- ANONYMOUS: "Environmental Enrichment | Pig & Calf Toys | EASYFIX", 31 July 2021 (2021-07-31), XP093289459, Retrieved from the Internet <URL:https://easyfix.com/product-range/enrichment-toys/> [retrieved on 20250623]

## Description

### Technical Field

This invention relates to toys for animals, particularly for pigs.

### Background Art

An important element in animal husbandry is ensuring that the animals are sufficiently entertained. While some animals such as cattle require little in the way of mental stimulation, intelligent animals including pigs, dogs and cats bore easily and require a greater degree of stimulation. If bored, they can indulge in destructive and aggressive behaviour, including damage to their environment. Pigs in particular can indulge in tail biting with resulting injury and possible infection and veterinary fees.

Balls are popular toys for animals, and indeed one of the leading toys designed specifically for pigs is in the form of an American football. Pigs however differ from dogs and cats in that they are typically kept in a muddy environment which becomes contaminated with their waste. Therefore, a drawback with football-type toys is that they become covered in dirt and are unhygienic.

An alternative solution is a suspended toy, which pigs can play with and which is typically mounted about head height. Ideally such toys have protrusions or teats which the pigs can bite and pull. Easyfix Rubber Products of Ballinasloe, Ireland, sell a pig toy of this type, which is in the form of a moulded rubber member in a generally cylindrical configuration and having several rubber teats extending out from the curved cylindrical surface. The device is suspended from chains above the pigs' enclosure.

It is an object of this invention to provide an improved and alternative product to the above-described solutions.

### Disclosure of the Invention

There is provided a toy for animals according to claim 1.

In this way, the amount of contact with the ground is minimal relative to a conventional ball-type toy. The amount of contamination (when used in a pigsty or similar environment) is decreased. Additionally, the unitary or integral construction of a core with extending legs provides one or more legs extending upwards to be grasped by the mouth of an animal regardless of the orientation of the toy. A further advantage is that such a toy can undergo limited degrees of rolling, i.e. enough to be interesting to the animals but not enough that it rolls easily away.

WO 99/25183 A1 relates to a pet toy product for holding one or more animal treats has a body member having an outer surface with one or more recesses for removably holding one or more animal treats. The recesses may be of varying depth so that the treats in the deeper recesses are more difficult for the animal to extract than are the treats in the shallower recesses. The recesses may be circular, triangular, irregular, in the form of a groove or any other suitable configuration. The outer surface of the toy may be raised to accommodate the recesses or the recesses may extend into the surface. The pet toy may have recesses forming openings which extend through the side wall of the pet toy product for receiving treats. With this structure, the pet owner can replenish the treats as often as necessary to maintain the pet's interest in the toy. Different treats can be provided with different nutritional values and tastes. Because some treats will be more difficult for the animal to remove than others, the animal can be kept occupied for several hours before the treats need to be replaced again. The treats may be held in the recesses by friction, adhesive or adhesion

US 2005/039696 A1 relates to a chewable animal toy (dog bone) having multiple extensions radiating from a core with some of the extensions serving as supports for the toy on a horizontal surface and with at least one other extension extending above the core. When all the extensions are of equal length, equidistant from each other and at equal angles with respect to each other, any combination of at least three extensions serve as support for the toy with another extension extending upwardly for ease of animal play or chewing. When there are at least four extensions with at least three of the extensions being of substiantially equal length and being at substantially equal angles with respect to each other, those three extensions serve as support for the toy on a horizontal surface and at least a fourth extension extends above the core

GB 1 290 777 A relates to a game ball made of a resilient material, and has a hollow spherical body, and preferably six equally spaced substantially cylindrical spikes which can be grasped by the thumb and four fingers of a hand. These spikes may be integral with the body wall, and are preferably 3 inches long and 1 inch in diameter. A diameter of between 5 and 6 inches is preferred for the body. Two opposite spikes may be brightly coloured.

US 2013/017912 A1 relates to a removable moisture-resistant ball cover. The ball cover substantially encloses a ball, such as a tennis ball, and includes an opening which can be expanded to attach the ball cover over the ball or remove the ball cover from the ball. The ball cover may be made from a silicone rubber material so as to be resistant to the absorption of liquid and also flexible enough to be easily attached and detached from the ball. The opening may be shaped in a variety of manners, such as a circular, crescent or oval, to permit the opening to be easily expanded to attach or detach the cover from the ball. The ball cover is sufficiently thin to maintain the functionality and usefulness of the dimensions of the ball but sufficiently thick to avoid being easily damaged by an animal which may chew on the ball with the ball cover.

US 745 806 A relates to a mouthpiece and legs supporting said mouthpiece above the ground.

Preferably, for any adjacent pair of legs provided on the toy, the angle measured from the core to the respective points of contact of said pair of legs, is not greater than 110 degrees.

Preferably, the legs extend radially outward from the core.

Preferably, each leg has a length of between 20 and 200 mm.

Preferably, the core is defined by a shape having an average width or diameter of between 50 and 250 mm.

Preferably, each leg is from 10 to 50 mm in width or diameter.

Preferably, the maximum dimension of the toy is between 75 and 500 mm.

A particularly preferred toy has 8 to 15 radial legs, each being radially directed with the directions of individual legs being approximately equally spaced around a spherical surface centred on the core. Particularly preferred are legs which are 75 to 150 mm long and 20 to 50 mm in diameter.

As mentioned above, the legs have rounded tips. For example, the tip of each leg may have a hemispherical shape.

Preferably, the legs have a minimum width or diameter at the tips thereof.

Preferably, the legs are of approximately equal length.

The toy is a moulded article of integral or unitary construction. Preferred materials are rubbers, especially vulcanised rubbers.

More preferably, antibacterial agents can be incorporated in the rubber.

### Brief Description of the Drawings

The invention will be further illustrated by the following description of embodiments thereof, given by way of example only with reference to the accompanying drawings, in which:
Fig. 1 is a first perspective view of a first embodiment of a toy, having 12 legs;
Fig. 2 is a second perspective view of the toy of Fig. 1;
Fig. 3 is a cross-section through the toy of Figs. 1 and 2, taken along the line III-III of Fig. 2;
Figs. 4-6 show a second embodiment of toy, having eight legs, using similar views to Figs. 1-3, respectively;
Figs. 7-9 show an embodiment of toy not according to the claimed invention, having six legs, using similar views to Figs. 1-3, respectively;
Figs. 10-12 show an embodiment of toy not according to the claimed invention, having twenty legs, using similar views to Figs. 1-3, respectively; and
Figs. 13-15 show an embodiment of toy not according to the claimed invention, having twenty-six legs, using similar views to Figs. 1-3, respectively.

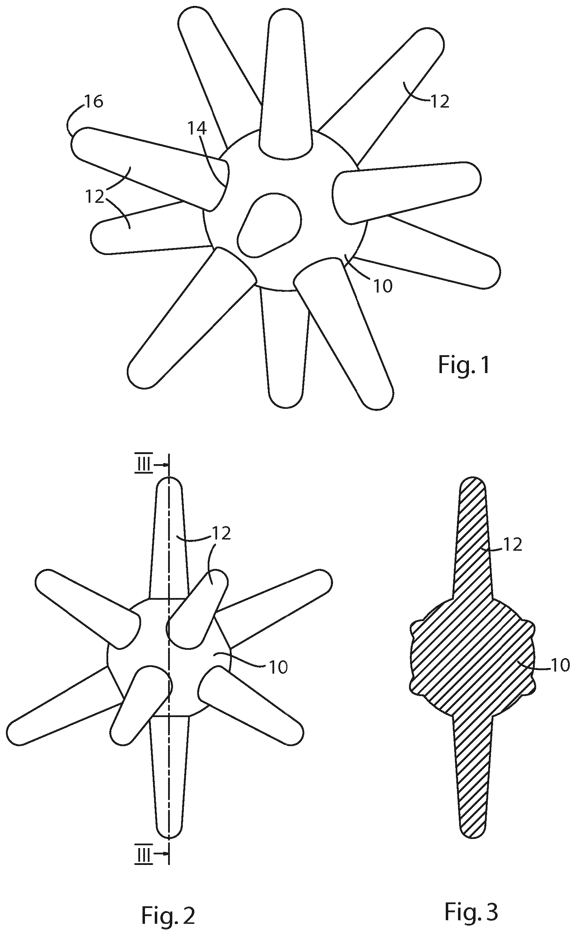

In Fig. 1 there is shown a toy made of an integrally moulded, vulcanised rubber shape having a central core 10 and a set of twelve legs 12 extending from the core. Figs. 2 and 3 show the toy in a different perspective view and in a cross-section taken along the line III-III (Fig. 2), respectively. As seen in Fig. 1, each leg extends from a base 14 where it meets the core 10 to a tip 16.

In the embodiment shown, the legs are of equal length (though this is not essential), and the legs extend out at the vertices of a notional dodecahedron centred on the centre of the core (again this is not essential, though it is preferred).

It will be observed that regardless of its orientation, the toy of Fig. 1 will come to rest on a flat surface with the tips 16 of three legs 12 in contact with the surface and with the core 10 and all of the other legs out of contact with the ground. The toy can be designed with different numbers of legs, and such that more than three legs are in contact with the ground at any time.

The legs of this embodiment taper from a diameter of 38.5 mm to a diameter of 24 mm, and the tip of each leg is a hemisphere of radius 12 mm. The length of each leg is 116.75 mm.

It will be appreciated that the dimensions can vary for optimum suitability with different animals. While designed primarily with pigs in mind, the toy can be optimised for other animals with different dimensions. Furthermore, even for pigs, the dimensions will preferably be varied depending on the breed and age of pig to which the toy is to be given (i.e. different toys can be designed for bonhams or suckling pigs, fatteners, or sows).

Preferred dimension ranges (in mm) are as follows:

| | Preferred | More preferred |
|---|---|---|
| Length of leg: | 20-200 | 75-150 |
| Diameter of leg at base: | 12-50 | 15-45 |
| Diameter of leg at tip: | 10-40 | 12-35 |
| Core maximum dimension: | 40-250 | 50-150 |
| Toy maximum dimension: | 75-500 | 200-450 |

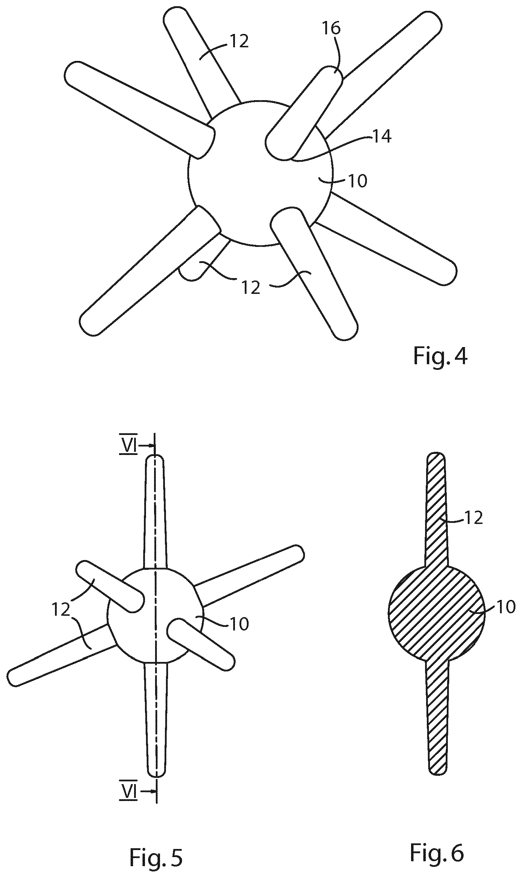

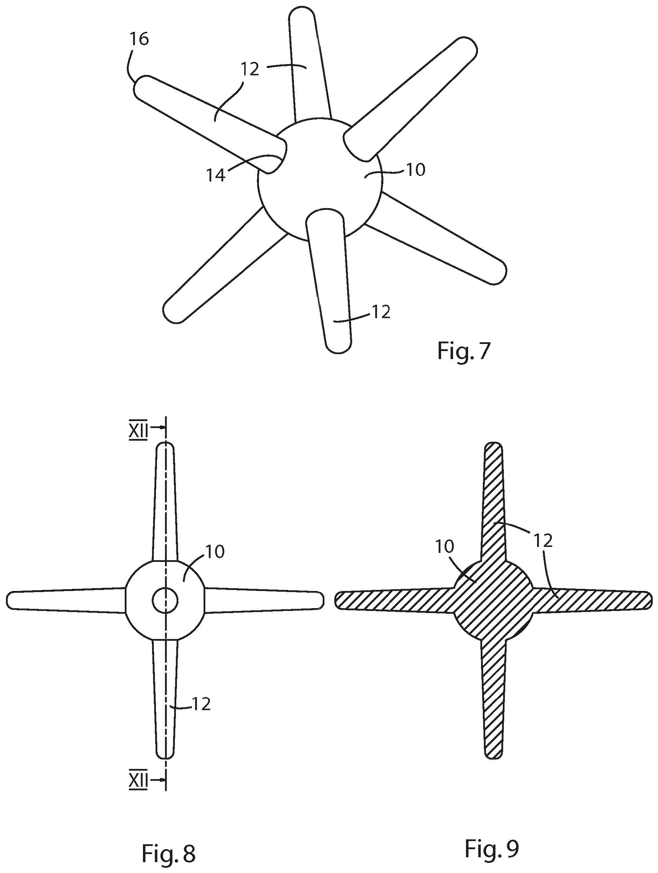

Five further embodiments will now be described. In each case, the toy is shown in three figures comprising a first perspective view (Figs. 4, 7, 10, 13), a second perspective view (Figs. 5, 8, 11, 14), and a cross-sectional view (Figs. 6, 9, 12, 15) which in each case is taken along the line denoted by the figure number (in Roman numerals) of the cross-section indicated in the second perspective view for that embodiment. Thus, Fig. 9, for example, is taken along the line XII-XII in Fig. 8. Each toy has a core 10, and a different number of legs 12 extending from a base 14 at the core to a tip 16.

Figs. 4-6 show an eight-legged toy, the legs being disposed at the vertices of a notional octahedron.

Figs. 7-9 show a six-legged toy not according to the claimed invention, where the legs 12 are disposed in a cubic arrangement.

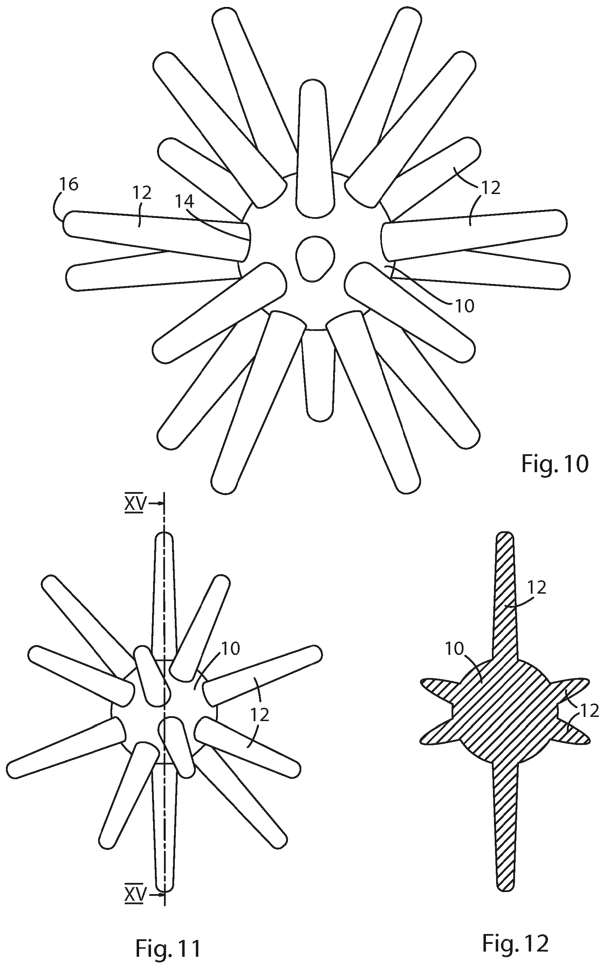

Figs. 10-12 show a twenty-legged toy not according to the claimed invention, where the legs are disposed in an icosahedral arrangement.

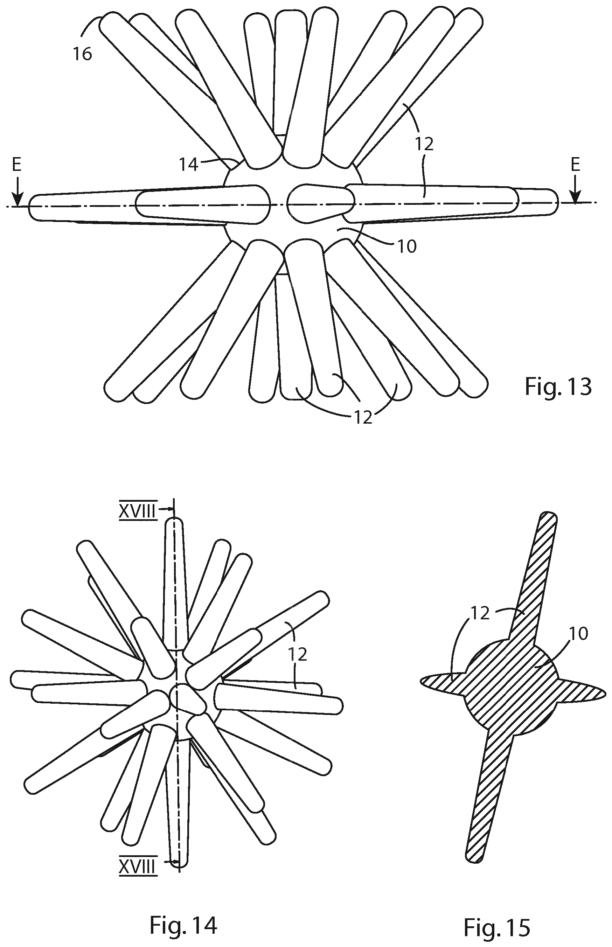

Figs. 13-15 show a twenty-six-legged toy not according to the claimed invention. The toy is shown as it is actually made in Fig. 13, where the legs are not of equal length. However, Figs. 14 and 15 show the legs as if they had been of equal length, to illustrate that the legs are disposed at regular angles.

As seen in Fig. 13 because the legs are not of equal length, it is possible to create a toy which is more or less bistable, i.e. there are two orientations where a different set of nine leg tips comes into contact with the ground. One of those configurations is shown in Fig. 13 and the other is achieved by turning the toy on its head. All of the legs below the equator E-E terminate at a common horizontal level and all of the legs above the equator terminate at another common horizontal level. The toy can be placed on the ground with a pair of the legs lying on the equator E-E, and another of the legs (upper or lower) is in contact with the ground, but in use, the animals will usually tip the toy onto one of the two bistable orientations.

It can be seen that in the toy of Fig. 13 in the orientation shown, nine legs above the equator have direction which includes a component directed away from the ground; the nine legs below the equator have a directional component towards the ground, and the remaining eight equatorial legs are disposed parallel to the ground with neither an upward nor a downward directional component.

The invention is not limited to the embodiments described which can be modified without departing from the scope of the claimed invention.

## Claims

1. A toy for animals having an integrally moulded solid construction comprising a substantially spherical core member (10) having legs (12) extending radially outwardly therefrom and the legs being equally spaced, the legs (12) further being of sufficient length and disposed in respective directions such that when the toy is placed on the ground in any orientation, the core (10) is raised off the ground with three or more legs (12) in contact with the ground, and with at least one further leg (12) projecting from the core (10) in a direction having a component which is directed away from the ground, wherein each of the legs (12) is tapered from the core (10) and has a rounded tip, **characterized in that** it has eight to fifteen legs and the toy has a weight in the range of 1.5 to 5.5 kg.

2. The toy of claim 1, wherein for any adjacent pair of legs (12) provided on the toy, the angle measured from the core (10) to the respective points of contact of said pair of legs (12), is not greater than 110 degrees.

3. The toy of claim 1, wherein each leg (12) has a length of between 20 and 200 mm.

4. The toy of any preceding claim, wherein the core (10) is defined by a shape having an average width or diameter of between 50 and 250 mm.

5. The toy of any preceding claim, wherein each leg (12) is from 10 to 50 mm in width or diameter.

6. The toy of any preceding claim, wherein the maximum dimension of the toy is between 75 and 500 mm.

7. The toy of any preceding claim, wherein each leg being radially directed with the directions of individual legs (12) being approximately equally spaced around a spherical surface centred on the core (10).

8. The toy of any preceding claim, wherein the legs (12) are 75 to 150 mm long and 20 to 50 mm in diameter.

9. The toy of any preceding claim, wherein the legs (12) have hemispherical tips.

10. The toy of any preceding claim, wherein the legs (12) have a minimum width or diameter at the tips thereof.

11. The toy of claim 10, wherein the width or diameter of the legs (12) at the tips is 10-40 mm.

12. The toy of any preceding claim, wherein the legs (12) are of approximately equal length.

13. The toy of any preceding claim, wherein the toy is composed primarily or entirely of rubber, preferably vulcanised rubber, and optionally wherein an antibacterial agent is incorporated in the rubber.

## Patentansprüche

1. Spielzeug für Tiere, das eine einstückig gegossene massive Konstruktion aufweist, die ein im wesentlichen kugelförmiges Kernelement (10), das Beine (12) aufweist, die sich von diesem radial nach außen erstrecken, und die Beine gleichmäßig beabstandet sind, umfasst, wobei die Beine (12) ferner eine ausreichende Länge aufweisen und in entsprechenden Richtungen angeordnet sind, sodass, wenn das Spielzeug in beliebiger Ausrichtung auf den Boden gestellt wird, der Kern (10) mit drei oder mehr mit dem Erdboden in Kontakt stehenden Beinen (12) und mit mindestens einem weiteren Bein (12), das von dem Kern (10) in einer Richtung absteht, die eine von dem Boden weg gerichtete Komponente aufweist von dem Boden abgehoben wird, wobei sich jedes der Beine (12) von dem Kern (10) aus verjüngt und eine abgerundete Spitze aufweist, **dadurch gekennzeichnet, dass** es acht bis fünfzehn Beine aufweist und das Spielzeug ein Gewicht im Bereich von 1,5 bis 5,5 kg aufweist.

2. Spielzeug nach Anspruch 1, wobei für jedes am Spielzeug bereitgestellte benachbarte Paar von Beinen (12) der von dem Kern (10) zu den jeweiligen Berührungspunkten des Paars von Beinen (12) gemessene Winkel nicht größer als 110 Grad ist.

3. Spielzeug nach Anspruch 1, wobei jedes Bein (12) eine Länge zwischen 20 und 200 mm aufweist.

4. Spielzeug nach einem der vorhergehenden Ansprüche, wobei der Kern (10) durch eine Form definiert ist, die eine durchschnittliche Breite oder einen Durchmesser zwischen 50 und 250 mm aufweist.

5. Spielzeug nach einem der vorhergehenden Ansprüche, wobei jedes Bein (12) eine Breite oder einen Durchmesser von 10 bis 50 mm hat.

6. Spielzeug nach einem der vorhergehenden Ansprüche, wobei die maximale Abmessung des Spielzeugs zwischen 75 und 500 mm liegt.

7. Spielzeug nach einem der vorhergehenden Ansprüche, wobei jedes Bein radial ausgerichtet ist und die Richtungen der einzelnen Beine (12) ungefähr gleichmäßig um eine auf den Kern (10) zentrierte kugelförmige Oberfläche beabstandet sind.

8. Spielzeug nach einem der vorhergehenden Ansprüche, wobei die Beine (12) 75 bis 150 mm lang sind und einen Durchmesser von 20 bis 50 mm haben.

9. Spielzeug nach einem der vorhergehenden Ansprüche, wobei die Beine (12) halbkugelförmige Spitzen aufweisen.

10. Spielzeug nach einem der vorhergehenden Ansprüche, wobei die Beine (12) an ihren Spitzen eine Mindestbreite oder einen Mindestdurchmesser aufweisen.

11. Spielzeug nach Anspruch 10, wobei die Breite oder der Durchmesser der Beine (12) an den Spitzen 10-40 mm beträgt.

12. Spielzeug nach einem der vorhergehenden Ansprüche, wobei die Beine (12) ungefähr gleich lang sind.

13. Spielzeug nach einem der vorhergehenden Ansprüche, wobei das Spielzeug hauptsächlich oder vollständig aus Kautschuk besteht, vorzugsweise aus vulkanisiertem Kautschuk, und wobei dem Kautschuk gegebenenfalls ein antibakterielles Mittel zugesetzt ist.

## Revendications

1. Jouet pour animaux ayant une construction solide moulée d'un seul tenant comprenant un élément central (10) sensiblement sphérique ayant des pattes (12) se prolongeant radialement vers l'extérieur à partir de celui-ci et les pattes étant régulièrement espacées, les pattes (12) étant également d'une longueur suffisante et disposées dans des directions respectives de telle sorte que, lorsque le jouet est placé sur le sol dans n'importe quelle orientation, l'élément central (10) est surélevé par rapport au sol avec trois pattes (12) ou plus en contact avec le sol, et avec au moins une autre patte (12) se prolongeant à partir de l'élément central (10) dans une direction ayant une composante dirigée à l'opposé du sol, dans lequel chacune des pattes (12) est effilée à partir de l'élément central (10) et a une extrémité arrondie, **caractérisé en ce qu'**il a entre huit et quinze pattes et **en ce que** le jouet a un poids compris entre 1,5 et 5,5 kg.

2. Jouet selon la revendication 1, dans lequel pour une quelconque paire adjacente de pattes (12) prévue sur le jouet, l'angle mesuré à partir de l'élément central (10) jusqu'aux points de contact respectifs de ladite paire de pattes (12), n'est pas supérieur à 110 degrés.

3. Jouet selon la revendication 1, dans lequel chaque patte (12) a une longueur comprise entre 20 et 200 mm.

4. Jouet selon une quelconque revendication précédente, dans lequel l'élément central (10) est défini par une forme ayant une largeur ou un diamètre moyen compris entre 50 et 250 mm.

5. Jouet selon une quelconque revendication précédente, dans lequel chaque patte (12) a une largeur ou un diamètre de 10 à 50 mm.

6. Jouet selon une quelconque revendication précédente, dans lequel la dimension maximale du jouet est comprise entre 75 et 500 mm.

7. Jouet selon une quelconque revendication précédente, dans lequel chaque patte est dirigée radialement, les directions des pattes (12) individuelles étant approximativement régulièrement espacées autour d'une surface sphérique centrée sur l'élément central (10).

8. Jouet selon une quelconque revendication précédente, dans lequel les pattes (12) ont une longueur comprise entre 75 et 150 mm et un diamètre compris entre 20 et 50 mm.

9. Jouet selon une quelconque revendication précédente, dans lequel les pattes (12) ont des extrémités hémisphériques.

10. Jouet selon une quelconque revendication précédente, dans lequel les pattes (12) ont une largeur ou un diamètre minimum aux extrémités de celles-ci.

11. Jouet selon la revendication 10, dans lequel la largeur ou le diamètre des pattes (12) au niveau des extrémités est de 10 à 40 mm.

12. Jouet selon une quelconque revendication précédente, dans lequel les pattes (12) sont de longueur approximativement égale.

13. Jouet selon une quelconque revendication précédente, dans lequel le jouet est composé principalement ou entièrement de caoutchouc, de préférence de caoutchouc vulcanisé, et éventuellement dans lequel un agent antibactérien est incorporé dans le caoutchouc.
